# EUROPÄISCHE PATENTSCHRIFT

(11) **EP 0 494 164 B1**
(45) Veröffentlichungstag und Bekanntmachung des Hinweises auf die Patenterteilung: **28.06.1995**
(21) Anmeldenummer: 90913157.5
(22) Anmeldetag: 07.09.1990
(51) Int. Cl.: G05D 3/14

(54) **VERFAHREN ZUM REGELN EINES REIBUNGSBEHAFTETEN STELLSYSTEMS**
PROCESS FOR REGULATING A SETTING SYSTEM SUBJECT TO FRICTION
PROCEDE DE REGULATION D'UN SYSTEME DE REGLAGE SUJET A LA FRICTION

(30) Priorität: 26.09.1989 DE 3932061
(43) Veröffentlichungstag der Anmeldung: 15.07.1992
(73) Patentinhaber: ROBERT BOSCH GMBH, 70442 Stuttgart (DE)
(72) Erfinder: HEINKEL, Hans-Martin, D-7000 Stuttgart 1 (DE)
(86) Internationale Anmeldenummer: DE9000682
(87) Internationale Veröffentlichungsnummer: WO9105297

(56) Entgegenhaltungen:
- EP-A- 0 289 626
- EP-A- 0 290 618
- DE-A- 1 909 627
- DE-A- 2 640 080
- GB-A- 744 630
- US-A- 2 410 289
- O.Föllinger: "Nicht lineare Regelungen I", Oldenbourg Verlag München Wien 1978, 2.Auflage, S.15-27.

## Beschreibung

Die Erfindung geht aus von einem Verfahren zum Regeln eines reibungsbehafteten Stellsystems nach der Gattung des Hauptanspruchs. Aus dem Fachbuch "Einführung in die Regelungstechnik", Kapitel: Zeitoptimaler Reger, Leonhard, W; Verlag Vierweg & Sohn, 2. Auflage 1980, Braunschweig, S. 292-304, ist die Struktur eines subzeitopitmalen Kaskadenreglers bekannt. Dessen Lageregler besitzt als nichtlineares Verstärkungsglied eine vom zeitoptimalen Regler abgeleitete Wurzelkurve mit einem für kleine Regelabweichungen linearen Bereich zur Vermeidung von Grenzzyklen. Die durch die erforderliche Kleinsignaldynamik bedingte hohe Verstärkung bewirkt, zusammen mit dem Sensor- und dem Analog/Digital-Wandlerrauschen, im eingeschwungenen Zustand eine unzulässig hohe Systembelastung und Geräuschentwicklung.

Der Erfindung liegt die Aufgabe zugrunde, ein Verfahren zum Regeln eines reibungsbehafteten Stellsystems anzugeben, das in Verbindung mit einem zeitoptimierten Großsignalverhalten und einem guten Klein- und Störsignalverhalten zu einer geringen Systembelastung, insbesondere zu einer geringen Lageunruhe in der Sollposition führt.

### Vorteile der Erfindung

Das erfindungsgemäße Verfahren ist gleichermaßen für rotatorische als auch für translatorische Stellsysteme geeignet. Durch eine bei kleinen Regelabweichungen auf die Reibung abgestimmte nichtlineare Kennlinie des Lagereglers werden die Systembelastung und die Geräuschentwicklung wesentlich abgesenkt. Die nichtlineare Kennlinie des Lagereglers wird derart festgelegt, daß der Wert der dem Stellsystem zugeführten Größe bei einer außerhalb eines vorgebbaren Zielgebietes liegenden Regelabweichung eine Kraft oder ein Drehmoment zur Folge hat, die/das zum Losreißen des Stellsystems aus der Haftung oder dem Haftmoment ausreicht, wobei die Bewegungsenergie des Stellsystems im Zielgebiet vernichtet werden kann.

Das erfindungsgemäße Verfahren ist insbesondere zur Implementierung auf einem Computer geeignet, da nur eine nichtlineare Kennlinie vorgegeben ist, die beispielsweise in Tabellenform abgelegt sein kann oder als funktionaler Zusammenhang darstellbar ist.

Vorteilhafte Weiterbildungen und Verbesserungen des erfindungsgemäßen Verfahrens ergeben sich aus Unteransprüchen.

Besonders vorteilhaft ist die Vorgabe einer geringeren Steigung in diesem, dem Kleinsignalbetrieb entspechenden Gebiet im Vergleich zum anschließenden Großsignalgebiet. Diese Maßnahme ermöglicht ein rechtzeitiges Abbremsen des Stellsystems beim Übergang vom Großsignal- zum Kleinsignalbetrieb.

Vorteilhaft ist weiterhin die zusätzliche Verwendung eines Integralanteils im Lageregler. In Verbindung mit der Maßnahme, daß die nichtlineare Kennlinie innerhalb des Zielgebietes eine von Null abweichende Steigung aufweist, sorgt der Integralanteil für eine erhöhte stationäre Genauigkeit.

Eine vorteilhafte Ausgestaltung sieht die Veränderung des Integralanteils in Abhängigkeit von der Regelabweichung vor, wobei vorzugsweise eine Reduzierung des Integralanteils zu Null außerhalb einer vorgebbaren Regelabweichung vorgesehen ist. Mit dieser Maßnahme ist eine Optimierung sowohl des Großsignal- als auch des Kleinsignalverhaltens möglich.

Das erfindungsgemäße Verfahren eignet sich zum Regeln jedes reibungsbehafteten Stellsystems. Die Verstellung der Regelstange einer Dieselkraftstoff-Einspritzpumpe und die Verstellung eines Kraftfahrzeug-Fahrwerks sind hier nur beispielhaft genannt.

Das erfindungsgemäße Verfahren wird anhand der Beschreibung in Verbindung mit der Zeichnung näher erläutert.

### Zeichnung

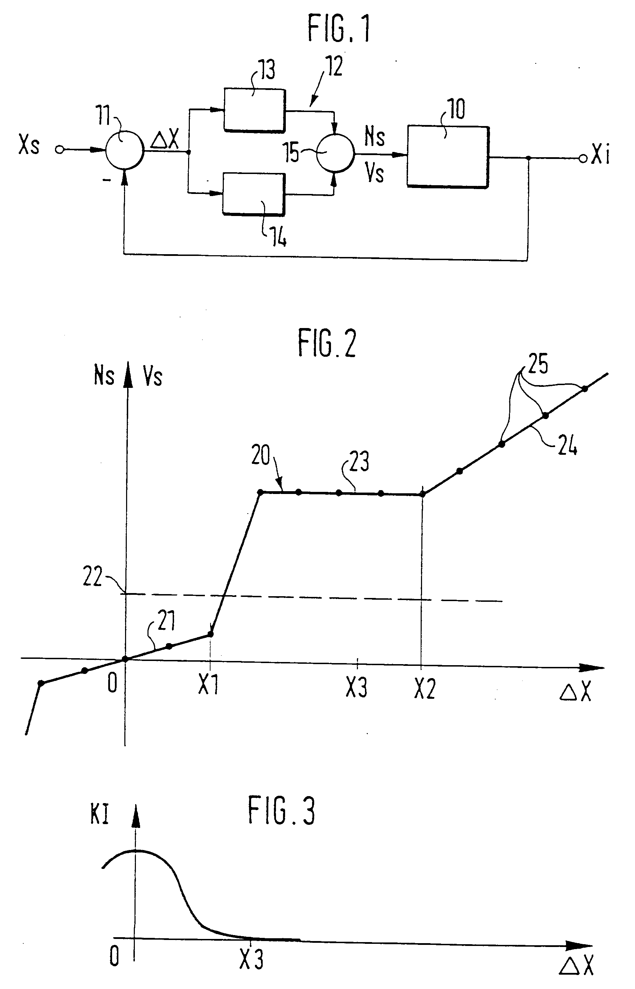

Figur 1 zeigt ein Strukturbild eines Regelsystems mit einem reibungsbehafteten Stellsystem, Figur 2 zeigt eine nichtlineare Kennlinie eines Lagereglers und Figur 3 zeigt einen funktionalen Zusammenhang zwischen einem Integralanteil und einer Regelabweichung.

Das in Figur 1 gezeigte Regelsystem regelt die Ausgangsgröße Xi, die dem Lage-Istwert eines reibungsbehafteten Stellsystems 10 entspricht, in Abhängigkeit von einem vorgegebenen Lage-Sollwert Xs. Ein Differenzbildner 11 ermittelt aus dem Lage-Sollwert Xs und dem Lage-Istwert Xi eine Regelabweichung Δx, die einem Lageregler 12 zugeführt wird. Der Lageregler 12 enthält ein Teil 13 mit einer nichtlinearen Kennlinie sowie ein Teil 14 mit einem Integralanteil. Die Ausgänge der Teile 13 und 14 werden in einem Summierer 15 addiert und anschließend als Eingangsgröße Ns, Vs dem Stellsystem 10 zugeführt.

Figur 2 zeigt eine nichtlineare Kennlinie 20, die im Teil 13 von Figur 1 enthalten ist. Die nichtlineare Kennlinie 20 stellt einen funktionalen Zusammenhang zwischen der Regelabweichung Δx und der Eingangsgröße Ns, Vs des reibungsbehafteten Stellsystems 10 her. Die Kennlinie 20 ist wenigstens aus drei Abschnitten zusammengesetzt. Kleine Regelabweichungen Δx liegen innerhalb des Zielgebietes 21 |Δx| ≦ |x1|. Im Zielgebiet 21 liegt der Wert der Größe Ns, Vs unterhalb des Wertes 22, der dem Reibmoment oder der Reibkraft des reibungsbehafteten Stellsystems 10 entspricht. Diese Grenze ist in Figur 2 strichliniert eingezeichnet. An das Zielgebiet 21 schließt sich ein zweites Gebiet |x1| < |Δx| ≦ |x2| an. Die Werte der Größe Ns, Vs liegen oberhalb der Grenze 22 des Reibmoments oder der Reibkraft. Die Kennlinie weist in diesem Gebiet eine kleinere Steigung auf als in einem dritten Gebiet 24, das sich in Richtung größere Regelabweichungen |Δx| > |x2| anschließt. Der Bereich |Δx| ≦ |x2| kann als Kleinsignalgebiet und der Bereich |Δx| > |x2| kann als Großsignalbereich bezeichnet werden. Sofern der Regler 12 als Software in einem Computer realisiert ist, treten an die Stelle der kontinuierlichen Kennlinie 20 diskrete Werte 25.

Figur 3 zeigt einen funktionalen Zusammenhang zwischen der Regelabweichung Δx und einem Integrationsbeiwert KI des Integralanteils, der im Teil 14 des Reglers 12 von Figur 1 enthalten ist. Der Integrationsbeiwert KI entspricht dem Kehrwert der Zeitkonstanten TI eines Integrierers. Der Integrationsbeiwert KI hängt von der Regelabweichung Δx ab. Unterhalb einer vorgebbaren Grenze |Δx| ≦ |x3| steigt KI auf einen bestimmten Wert an und geht bei einer Regelabweichung |Δx| > |x3| gegen Null.

Das erfindungsgemäße Verfahren wird anhand der Figuren 1 und 2 näher erläutert:
Das in Figur 1 gezeigte Regelsystem enthält das reibungsbehaftete Stellsystem 10, das hier nicht näher beschrieben wird.

Die Regelgröße Xi ist eine Lage, die bei Regelabweichungen Δx in kürzestmöglicher Zeit dem neuen Sollwert Xs angeglichen werden soll. Es kann sich sowohl um rotatorische als auch um translatorische Stellsysteme handeln. Die Eingangsgröße eines rotatorischen Systems 10 ist beispielsweise die Vorgabe einer bestimmten Stell-Drehzahl Ns, die Eingangsgröße eines translatorischen Systems 10 beispielsweise die Vorgabe einer Stell-Geschwindigkeit Vs. Nicht näher beschriebene unterlagerte Regelkreise bei rotatorischen Systemen sind beispielsweise Differenzdrehzahl- und Stromregler für den Antriebsmotor.

Gemäß Figur 2 wird in Abhängigkeit von der Regelabweichung Δx der Wert für der Größe Ns, Vs anhand der vorgegebenen nichtlinearen Kennlinie 20 ermittelt. Erfindungswesentlich ist die Festlegung der nichtlinearen Kennlinie 20 derart, daß der Betrag der Größe Ns, Vs bei einer außerhalb des vorgebbaren Zielgebietes 21 liegenden Regelabweichung Δx ein Drehmoment oder eine Kraft ergibt, das die zum Losreißen des Stellsystems 10 aus dem Haftmoment oder der Haftung ausreicht und daß die Bewegungsenergie des Stellsystems 10 im Zielgebiet 21 vernichtet werden kann. Hierzu ist lediglich die Kenntnis des Reibmoments oder der Reibungskraft des Stellsystems 10 erforderlich, das/die beispielsweise experimentell ermittelbar ist. In Figur 2 ist dieser Wert 22 strichliniert eingezeichnet. Die Werte für Ns, Vs innerhalb des Zielgebietes 21 liegen unterhalb des Wertes 22. Sofern kein Integralanteil im Lageregler 12 vorgesehen ist, weist die Kennlinie 20 im Zielgebiet 21 keine Steigung auf. Mit dieser Maßnahme kommt das Regelsystem innerhalb des Zielgebietes 21 vollständig zur Ruhe und es wird keine Energie verbraucht.

Im zweiten und dritten Gebiet 23, 24 ist der Wert der Größe Ns, Vs derart bemessen, daß die Bewegungsenergie des Stellsystems innerhalb des Zielgebietes 21 vernichtet werden kann. Die nichtlineare Kennlinie 20 kann im zweiten Gebiet 23 die Steigung Null oder einen vorgebbaren Wert aufweisen. Vorzugsweise ist die Steigung im zweiten Gebiet 23 stets geringer als die Steigung im dritten Gebiet 24. Mit dieser Maßnahme wird ein Bremsbereich für das Stellsystem 10 geschaffen, der für ein rechtzeitiges Abbremsen sorgt, falls das System 10 vom dritten Gebiet 24, das dem Großsignalbetrieb entspricht, zu kleineren Regelabweichungen Δx hin strebt. Ohne die vorzeitige Absenkung der Steigung des dritten Gebietes 24 im zweiten Gebiet 23 bestünde die Gefahr des Überschwingens.

Die statische, nichtlineare Kennlinie 20 des Lagereglers 12 kann vorteilhafterweise durch das Teil 14 von Figur 1 ergänzt werden, das einen Integralanteil enthält. Der Integralanteil erhöht die stationäre Genauigkeit. Besonders vorteilhaft ist die Maßnahme, den Integralanteil in Abhängigkeit von der Regelabweichung Δx vorzugeben. Der Zusammenhang zwischen der Regelabweichung Δx und dem Beiwert KI des Integralanteils ist in Figur 3 gezeigt. Der Beiwert KI ist der Kehrwert der Zeitkonstante TI eines Integrieres. Die Kennlinie wird vorzugsweise derart festgelegt, daß der Maximalwert von KI bei der Regelabweichtung Δx = Null auftritt und oberhalb eines vorgebbaren Werts |x3| der Regelabweichung Δx gegen Null geht. Der Grenzwert |x3| liegt beispielsweise im Kleinsignalbereich |Δx| ≦ |x2|. Eine erste mögliche Lage des Werts |x3| ist in Figur 2 beispielhaft angegeben. Der Wert |x3| kann aber auch zu Beginn des dritten Gebietes 24 liegen, das dem Großsignalbetrieb entspricht. Der in diesem Bereich zu Null reduzierte Integralanteil verhindert ein unnötiges Aufintegrieren zu hohen Werten Ns, Vs bei großen Regelabweichungen Δx.

Der Addierer 15, der nur erforderlich ist, falls das Teil 14 vorgesehen ist, addiert die Ausgangswerte der Teile 13 und 14 und gibt die Werte für die Größe Ns, Vs als Eingangsgröße zum Stellsystem 10 ab.

Der gesamte Lageregler 12 enthält also lediglich zwei Kennlinien, eine Integration und eine Summation und beansprucht dadurch nur geringe Rechenzeit, sofern das Verfahren auf einem Computer implementiert ist. Falls auf den Integral-Anteil verzichtet wird, entfällt eine Kennlinie, die Integration und die Summation.

Das erfindungsgemäße Verfahren eignet sich zur Regelung von sämtlichen reibungsbehafteten Stellsystemen 10. Beispielhaft für solche Stellsysteme werden hier die Regelstange einer Dieselkraftstoff-Einspritzpumpe und die Regelung eines Kraftfahrzeug-Fahrwerks herausgegriffen.

## Patentansprüche

1. Verfahren zum Regeln eines reibungsbehafteten Stellsystems, mit einem nichtlinearen Lageregler, der in Abhängigkeit von einer Regelabweichung (Δx) den Wert einer dem Stellsystem zugeführten Größe (Ns, Vs) ermittelt, dadurch gekennzeichnet, daß die nichtlineare Kennlinie (20) des Lagereglers (12) derart festgelegt wird, daß der Wert der Größe (Ns, Vs) bei einer außerhalb eines vorgebbaren Zielgebietes (21), innerhalb dem das Stellsystem (10) zur Ruhe kommen soll, liegenden Regelabweichung (Δx) ein Drehmoment oder eine Kraft ergibt, das/die zum Losreißen des Stellsystems (10) aus dem Haftmoment oder aus der Haftung ausreicht, und daß der Wert der Größe (Ns, Vs) einer Solldrehzahl oder einer Sollgeschwindigkeit entspricht, die eine Bewegungsenergie ergibt, die im Zielgebiet (21) vernichtbar ist.

2. Verfahren nach Anspruch 1, dadurch gekennzeichnet, daß die nichtlineare Kennlinie (20) innerhalb eines zweiten vorgebbaren Gebietes (23) eine geringere Steigung als in einem dritten Gebiet (24) aufweist.

3. Verfahren nach Anspruch 1 oder 2, dadurch gekennzeichnet, daß der Lageregler (12) einen Integralanteil enthält.

4. Verfahren nach Anspruch 3, dadurch gekennzeichnet, daß die nichtlineare Kennlinie (20) im Zielgebiet (21) eine Steigung aufweist, die von Null abweicht.

5. Verfahren nach Anspruch 3 oder 4, dadurch gekennzeichnet, daß der Integrationsbeiwert (KI) in Abhängigkeit von der Regelabweichung (Δx) verändert wird.

6. Verfahren nach Anspruch 5, dadurch gekennzeichnet, daß außerhalb einer vorgebbaren Regelabweichung |Δx| ≧ |x3| der Integrationsbeiwert (KI) zu Null reduziert wird.

7. Verfahren nach einem der vorhergehenden Ansprüche, gekennzeichnet durch die Verwendung bei der Regelstange einer Dieselkraftstoff-Einspritzpumpe und/oder bei der Regelung eines Kraftfahrzeug-Fahrwerks.

## Claims

1. Method for controlling a servo system having friction, with a non-linear position controller, which determines the value of a variable (Ns, Vs) supplied to the servo system as a function of a control deviation (Δx), characterised in that the non-linear characteristic (20) of the position controller (12) is defined in such a manner that the value of the variable (Ns, Vs) in the case of a control deviation (Δx) which lies outside a predeterminable target region (21), within which the servo system (10) is intended to come to rest, produces a torque or a force which is adequate to tear the servo system (10) free of the stiction torque or stiction, and in that the value of the variable (Ns, Vs) corresponds to a desired rotation speed or speed which produces a movement energy which can be dissipated in the target region (21).

2. Method according to Claim 1, characterised in that the non-linear characteristic (20) within a second predeterminable region (23) has a smaller gradient than in a third region (24).

3. Method according to Claim 1 or 2, characterised in that the position controller (12) contains an integral component.

4. Method according to Claim 3, characterised in that the non-linear characteristic (20) has a gradient which deviates from zero in the target region (21).

5. Method according to Claim 3 or 4, characterised in that the integration factor (KI) is varied as a function of the control deviation (Δx).

6. Method according to Claim 5, characterised in that the integration factor (KI) is reduced to zero outside a predeterminable control deviation | Δx | ≧ | x 3 | .

7. Method according to one of the preceding claims, characterised by use in the case of the control rod of a diesel fuel injection pump and/or in the control of a motor vehicle suspension.

## Revendications

1. Procédé de régulation d'un système de réglage soumis à frottement, utilisant un régulateur de position non linéaire qui détermine, en fonction d'un écart de réglage (Δx), la valeur d'une grandeur d'entrée (Ns, Vs), caractérisé en ce que la courbe non linéaire (20) du régulateur de position (12) est déterminée de manière que la valeur de la grandeur (Ns, Vs), lorsque l'écart de réglage (Δx) sort d'une zone-objectif dans laquelle le système de réglage (10) doit venir au repos, délivre un couple ou une force de valeur suffisante pour libérer le système de réglage (10) du couple ou de la force d'adhérence qui le retient, la valeur de la grandeur (Ns, Vs) correspondant à une vitesse de rotation ou de translation théorique fournissant une énergie cinétique qui peut être amenée à zéro dans la zone-objectif (21).

2. Procédé selon la revendication 1, caractérisé en ce que la courbe non linéaire (20) présente, dans une seconde zone donnée (23) une pente inférieure à celle qu'elle présente dans une troisième zone (24).

3. Procédé selon la revendication 1 ou 2, caractérisé en ce que le régulateur de position (12) contient une partie à intégration.

4. Procédé selon la revendication 3, caractérisé en ce que la courbe non linéaire (20), dans la zone-objectif (21), présente une pente non nulle.

5. Procédé selon la revendication 3 ou 4, caractérisé en ce que le facteur de correction (KI) de l'intégration varie en fonction de l'écart de réglage (Δx).

6. Procédé selon la revendication 5, caractérisé en ce qu'au delà d'un écart de réglage donné |Δx|≧|x3|, le facteur de correction (KI) est ramené à zéro.

7. Procédé selon une des revendications précédentes, caractérisé en ce qu'il est appliqué à la tige de réglage d'une pompe d'injection de moteur Diesel et/ou pour réguler un train roulant d'automobile.
